# EUROPEAN PATENT APPLICATION

(11) **EP 2 202 967 A1**
(43) Date of publication of application: **30.06.2010**
(21) Application number: 09704727.8
(22) Date of filing: 16.01.2009
(51) Int. Cl.: H04N 5/76, H04M 1/00, H04M 1/725, H04N 7/173

(54) **PORTABLE TERMINAL, METHOD FOR RECORDING TELEVISION BROADCAST THEREFOR, AND PROGRAM FOR RECORDING TELEVISION BROADCAST**

(30) Priority: 25.01.2008 JP 2008014932
(71) Applicant: Nec Corporation, Tokyo 108-8001 (JP)
(72) Inventor: SHIMAZAKI, Mamoru, Tokyo 108-8001 (JP)
(74) Representative: Merkau, Bernhard
(86) International application number: PCT/JP2009/051017
(87) International publication number: WO 2009/093669

(57) **Abstract**

A mobile terminal according to an exemplary of the invention includes a recording control means for controlling television broadcasts recording and playing, a setting storage means for storing predetermined conditions and a recording means for recording contents of the television broadcasts based on control of the recording control means, the recording control means controls the recording means so as to start recording the television broadcasts when the mobile terminal has changed its form into a predetermined form as a trigger during the television broadcasts being received, and controls the recording means so as to stop recording the television broadcasts when the predetermined conditions stored in the setting storage means is satisfied to solve a problem of wasting a memory area when television broadcasts is recorded by the mobile terminal.

## Description

### TECHNICAL FIELD

The present invention relates to a mobile terminal which has a TV (television) function and a recording function of TV broadcasts, a recording method of TV broadcasts by the mobile terminal and a program for recording TV broadcasts by the mobile terminal.

### BACKGROUND ART

When a user watches TV using a mobile terminal having a TV function, for example, a mobile phone, many of users are watching TV using a little spare time like a traveling time. Within such a limited amount of time, the user cannot watch an entire program.

Accordingly, when the user wants to watch continuation of program, the user used to record TV broadcasts, using the mobile phone having a function to record TV broadcasts, by issuing an instruction for recording start or forced termination with operating an operating unit.

Thus, whenever the user wants to watch continuation of program, the user has to perform a recording start operation each time. This is troublesome operation for the user. An apparatus which conquers this problem is disclosed in Japanese Patent Application Laid-Open No. 2006-020287 and Japanese Patent Application Laid-Open No. 2006-339932. Japanese Patent Application Laid-Open No. 2006-020287 discloses a mobile terminal apparatus which records TV images at a memorized start time when it detects having been closed. Japanese Patent Application Laid-Open No. 2006-339932 discloses a mobile terminal apparatus which performs a recording operation during an interrupted period even if outputs of TV image are interrupted, and plays broadcast contents from a short time before the interrupted portion when it detects having been opened later.

### DISCLOSURE OF INVENTION

### Technical Problem

The mobile terminal apparatus disclosed in Japanese Patent Application Laid-Open No. 2006-020287 does not stop recording if not opened again after having been closed. For this reason, there is a problem that a memory area is used wastefully because the mobile terminal apparatus records also unnecessary portions. The mobile terminal apparatus disclosed in Japanese Patent Application Laid-Open No. 2006-339932 remembers a maximum time in advance during which output could be interrupted, and can give the user an alarm if an interruption is not canceled even after that time has passed. However, there is a problem that this mobile terminal apparatus also wastes a memory area like a mobile terminal apparatus disclosed in Japanese Patent Application Laid-Open No. 2006-020287.

The object of the present invention is to provide a mobile terminal, a recording method of TV broadcasts by the mobile terminal and a program for recording TV broadcasts by the mobile terminal which solve above mentioned problem of wasting a memory area.

### Technical Solution

The first mobile terminal of the present invention has a TV function and a TV broadcasts recording function and changes a form thereof into a predetermined form freely, and the mobile terminal includes a setting storage means which stores predetermined conditions; a recording means to record contents of the TV broadcasts; and a recording control means which controls the recording means so as to start recording the TV broadcasts when the mobile terminal has changed a form thereof into a predetermined form as a trigger during the TV broadcasts being received, and controls the recording means so as to stop recording the TV broadcasts when the predetermined condition stored in the setting storage means is satisfied.

A recording method of TV broadcasts by the first mobile terminal of the present invention, which has a TV function and a TV broadcasts recording function and changes a form thereof into a predetermined form freely, includes storing predetermined conditions; starting recording the TV broadcasts when said mobile terminal has changed a form thereof into a predetermined form as a trigger during the TV broadcasts being received; and stopping recording the TV broadcasts when the predetermined condition stored is satisfied.

A program for recording TV broadcasts by the first mobile terminal of the present invention, which has a TV function and a television broadcasts recording function and changes a form thereof into a predetermined form freely, for causing a computer to execute: a process of storing predetermined conditions; a process of starting recording the TV broadcasts when the mobile terminal has changed a form thereof into a predetermined form as a trigger during the TV broadcasts being received; and a process of stopping recording the TV broadcasts when the predetermined condition stored is satisfied.

### Advantageous Effects

The present invention has advantages in which a mobile terminal can record TV broadcasts using a memory area efficiently.

### BRIEF DESCRIPTION OF DRAWINGS

Fig. 1 is a schematic diagram showing a configuration of mobile terminal in the embodiment 1 of the present invention.
Fig. 2 is a flowchart showing an operation of mobile terminal in the embodiment 1 of the present invention.
Fig. 3 is a figure showing setting procedures for recording duration time information in the embodiment 1 of the present invention.
Fig. 4 is a figure illustrating a recording operation in the embodiment 1 of the present invention.
Fig. 5 is a flowchart showing an operation of mobile terminal in the embodiment 2 of the present invention.
Fig. 6 is a figure showing setting procedures for record ending time information in the embodiment 2 of the present invention.
Fig. 7 is a figure illustrating a recording operation in the embodiment 2 of the present invention.
Fig. 8 is a flowchart showing an operation of mobile terminal in the embodiment 3 of the present invention.
Fig. 9 is a figure showing setting procedures for event information in the embodiment 3 of the present invention.
Fig. 10 is a figure showing a start time event information table stored in a setting memory part in the embodiment 3 of the present invention.
Fig. 11 is a figure illustrating a recording operation in the embodiment 3 of the present invention.
Fig. 12 is a figure showing setting procedures for recording setting information in the embodiment 4 of the present invention.
Fig. 13 is a flowchart showing an operation of mobile terminal in the embodiment 4 of the present invention.
Fig. 14 is a figure showing an example of the recording setting information stored in a setting memory part in the embodiment 4 of the present invention.
Fig. 15 is a figure illustrating a recording operation in the embodiment 4 of the present invention.
Fig. 16 is a figure showing a configuration of mobile terminal in the embodiment 5 of the present invention.

### Explanation of Reference

- 10: Controller
- 11: TV control part
- 12: Recording control part
- 13: Setting control part
- 20: Telephone radio unit
- 21: Telephone antenna part
- 22: Power supply unit
- 23: Voice transmitting unit
- 24: Voice receiving unit
- 25: TV receiving unit
- 26: TV antenna part
- 27: Display unit
- 28: Speaker
- 29: Open-close detecting unit
- 30: Operating unit
- 31: Memory unit
- 32: Recording part
- 33: Setting memory part
- 40: Clock unit
- 41: Timer
- 42: Clock
- 50: Mobile terminal
- 51: Recording control means
- 52: Setting memory means
- 53: Recording means

### BEST MODE FOR CARRYING OUT THE INVENTION

Hereinafter, embodiments of the present invention will be described with reference to the drawings.

### [Embodiment 1]

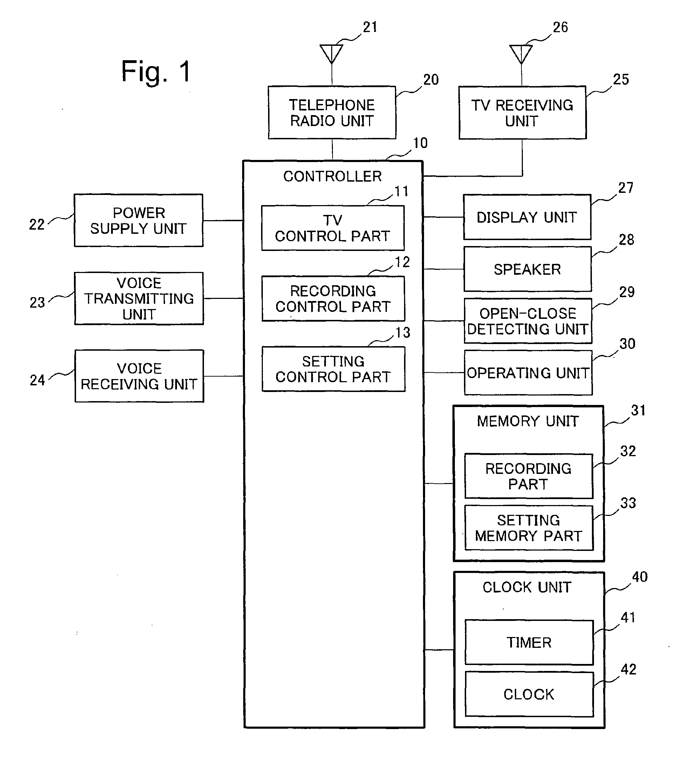

Fig. 1 is a figure showing a configuration of the mobile terminal 1 according to the present invention. A mobile terminal may be a mobile phone, for example. As shown in Fig. 1, the mobile terminal 1 according to the present invention has a controller 10 and a telephone radio unit 20. The controller 10 and the telephone radio unit 20 send and receive data. A telephone antenna part 21 for sending and receiving radio signals is connected to the telephone radio unit 20. A power supply unit 22, a voice transmitting unit 23, a voice receiving unit 24, a TV receiving unit 25, a display unit 27, a speaker 28, an open-close detecting unit 29, an operating unit 30, a memory unit 31 and a clock unit 40 are connected to the controller 10. Each element performs transmission or reception, or transmitting and receiving data to or from the controller 10.

Further, the controller 10 includes a TV control part 11, a recording control part 12 and a setting control part 13. The memory unit 31 includes a recording part 32 and a setting memory part 33. The clock unit 40 includes a timer 41 and a clock 42.

The power supply unit 22 supplies electric power to the whole mobile terminal. The voice transmitting unit 23 conveys user's voice signals to the other side. The voice receiving unit 24 conveys voice signals from the other side to the user. The TV antenna part 26 which is used for receiving TV signals is connected to the TV receiving unit 25. The TV receiving unit 25 receives TV signals via the TV antenna part 26. The display unit 27 shows TV images and a variety of information or the like. The speaker 28 transfers music sound, voice sound or informing sound or the like to the user. The open-close detecting unit 29 always detects an open-close state of mobile terminal 1 while the mobile terminal 1 is running. The operating unit 30 receives initiation instructions of various functions like call transmission or reception from the user.

The TV control part 11 of the controller 10 controls TV broadcasts reception. The recording control part 12 controls recording and playing of TV images. The recording control part 12 is always monitoring open-close state detection by the open-close detecting unit 29. The setting control part 13 performs setting control of recording setting information which specifies setting conditions relating to recording of TV images.

The recording part 32 of the memory unit 31 stores video recording data of recorded TV images. The setting memory part 33 stores recording setting information or various setting information on a telephone.

The description about a connection for a radio unit in the mobile terminal and a radio communications system such as a base station and its configuration will be omitted because they are known well for a person skilled in the art.

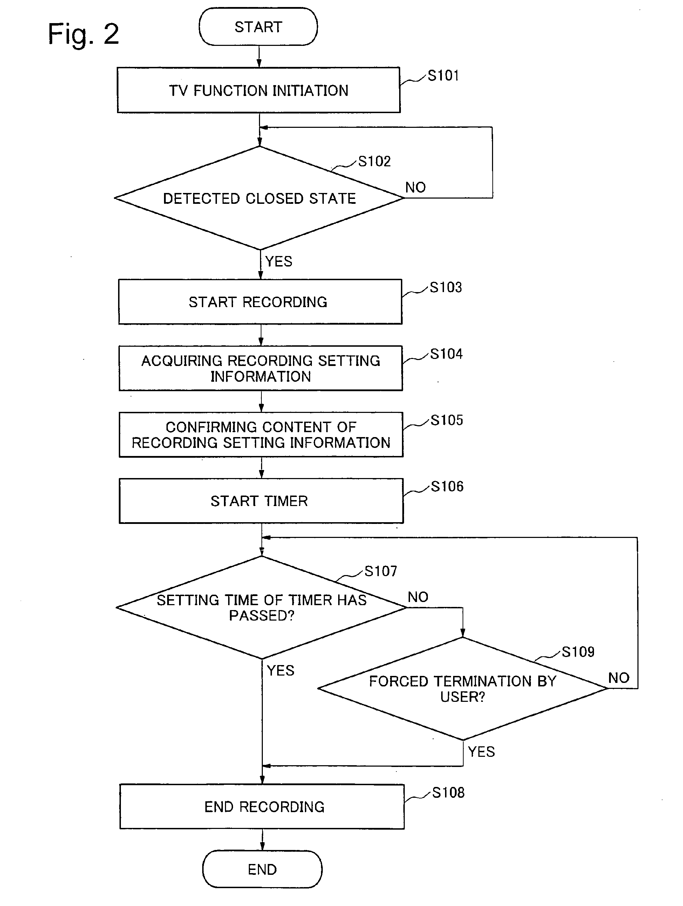

Fig. 2 is a flowchart showing an operation of mobile terminal 1 in the embodiment 1 of the present invention. A recording operation in the mobile terminal 1 will be described with reference to Fig. 2.

First, it is supposed that the user has operated the operating unit 30 of the mobile terminal 1, and given an instruction to initiate a TV function. In response to the instruction, the TV control part 11 initiates the TV receiving unit 25, and controls it to receive TV signals. The TV control part 11 converts TV signals which the TV receiving unit 25 has received to appropriate data and displays on the display unit 27. As a result, the user can watch TV images shown on the display unit 27. The user is often watching TV using a little spare time during travelling or the like. While the user is watching TV, the open-close detecting unit 29 is detecting "open state" of the mobile terminal 1.

After watching TV for a while, it is supposed that the user has folded the mobile terminal 1 due to a case of ending the travelling time or the like. At that time, the open-close detecting unit 29 detects "close state" of the mobile terminal 1, and the recording control part 12 recognizes this condition (in Step S102 "YES").

The recording control part 12 starts a recording operation by recognizing this "close state" as a trigger (Step S103). Here, the recorded data is stored in the recording part 32 in the memory unit 31.

After having started recording, the recording control part 12 acquires the recording setting information stored in the setting memory part 32 in the memory unit 31 (Step S104). According to the embodiment 1, the setting memory part 32 holds recording duration time information as the recording setting information. Here, the recording duration time information is a value of a certain time during which TV program is to be recorded that the user set in advance. The user can set the recording duration time information arbitrarily on the mobile terminal 1.

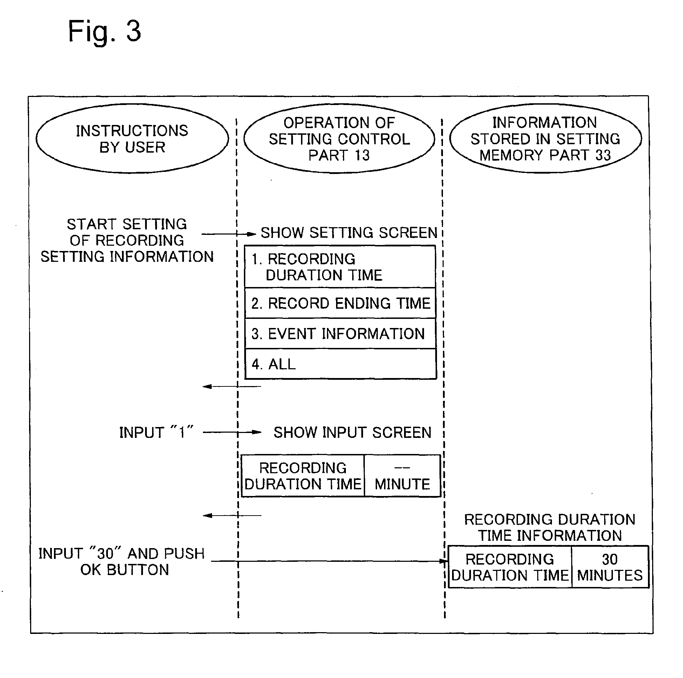

Fig. 3 is a figure showing setting procedures for the recording duration time information. The setting procedures for the recording duration time information will be described with reference to the Fig. 3. The user gives an instruction for setting the recording setting information by operating the operating unit 30 in an arbitrary timing. The setting control part 13 of the controller 10 shows a setting screen of recording setting information on the display unit 27 in response to receiving that instruction. The setting screen of recording setting information is a screen which indicates four choices of "1.recording duration time", "2.record ending time", "3.event information" and "4.all" as shown in Fig. 3. Here, the case "1.recording duration time" is described, and others will be mentioned later.

The user inputs "1" on the setting screen. Then, the setting control part 13 shows an input screen for inputting the recording duration time. For example, the user types "30 minutes" here, and pushes an "OK" button. The setting control part 13 generates the data of "recording duration time for 30 minutes" as the recording duration time information. This is the recording duration time information which indicates "It records for 30 minutes." The setting control part 13 stores this recording duration time information in the setting memory part 42. By operating as mentioned above, the recording duration time information can be set. The user can perform the above setting operation arbitrarily in advance.

The recording control part 12 confirms contents of the recording setting information acquired in Step S104 (Step S105). Here, "recording duration time for 30 minutes" is read out as the recording setting information. Although "30 minutes" is shown as an example, the user can set it arbitrarily as mentioned above. The recording control part 12 sets the recording duration time having been read out to the timer 41, and starts it (Step S106).

Next, the recording control part 12 performs determination of whether a setting time of the timer 41 has passed or not (Step S107). When the setting time has not passed (NO), the recording control part 12 performs determination of whether a forced termination instruction has been given by the user (Step S109). When the forced termination instruction has been given (YES), the recording control part 12 stops recording (Step S108). When no forced termination instruction has been given (NO), the recording control part 12 returns to Step S107.

When the set time of the timer 41 has passed at Step S107 (YES), the recording control part 12 stops recording (Step S108). At this time, recording is completed for time period set in advance.

The recording control part 12 is controlling a series of above-mentioned procedures. Accordingly, the user does not need to perform any operations until recording for the set time finishes after the user performed an operation of closing the mobile terminal 1 in Step S102.

After recording has been started at Step S102, even if the user opens the mobile terminal 1 again, the recording control part 12 continues the operation of recording. The user may be able to perform other operations in this state such as transmitting e-mails or the like. The user also may be able to set arbitrarily in advance so as not to stop recording even a set time of timer has passed in Step S107.

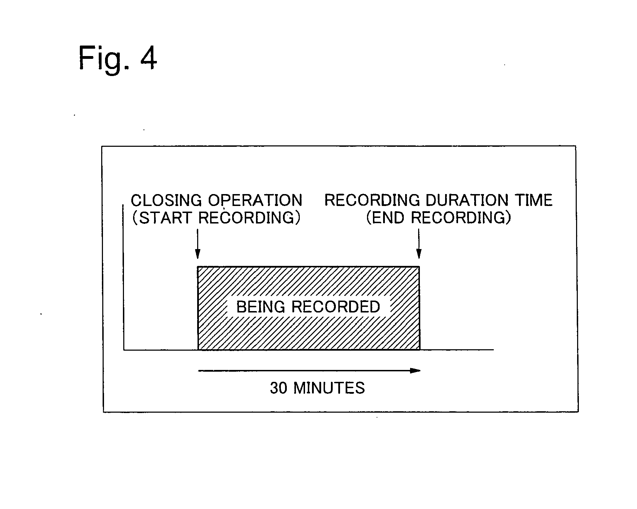

Fig. 4 is a figure illustrating a recording operation in the embodiment 1. As shown in Fig. 4, the recording control part 12 starts recording by a closing operation in Step S102 as a trigger, and stops recording operation when the set time (here, 30 minutes) of the timer 41 has passed in Step S107.

As it has been described above, in the mobile terminal 1 according to the embodiment 1, the setting control part 13 receives a duration time for recording TV broadcasts in advance from the user and stores in the setting memory part 33. This configuration has advantages in which the user can set an arbitrary duration time for recording. Also, the recording control part 12 controls to stop recording when the recording duration time stored in the setting memory part 33 has passed. This configuration has advantages in which the mobile terminal 1 can record TV broadcasts using a memory area efficiently because the mobile terminal 1 is able to record only the required contents.

### [Embodiment 2]

Next, the embodiment 2 of the present invention will be described.

The configuration of mobile terminal in the embodiment 2 of the present invention is similar to the configuration of the mobile terminal 1 in the embodiment 1. Although it is different in data in the setting memory part 33, the description will be omitted because other configurations are the same as those of the embodiment 1.

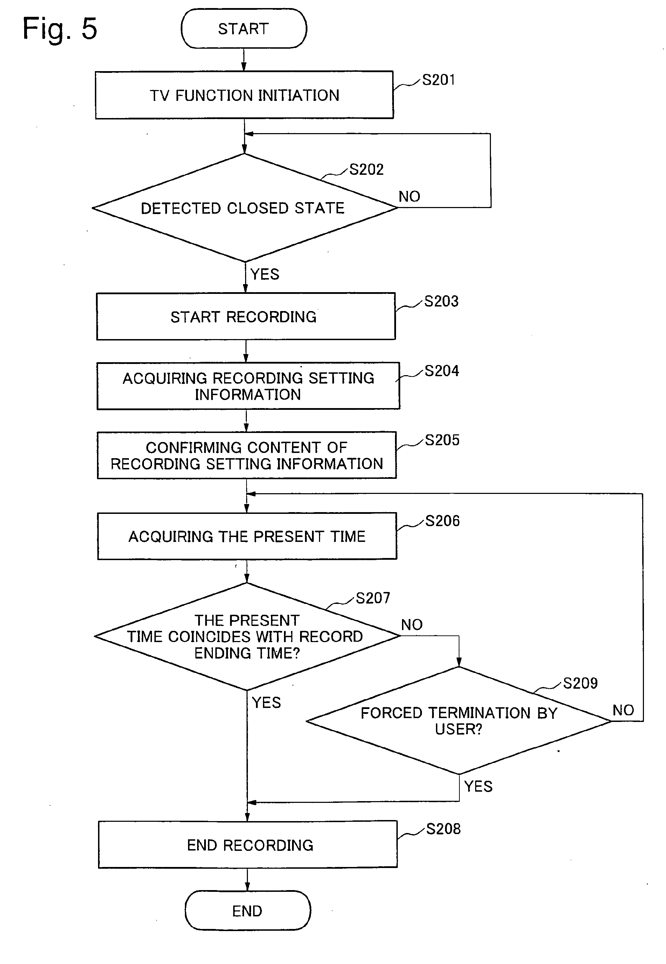

Fig. 5 is a flowchart showing an operation of the mobile terminal 1 in the embodiment 2 of the present invention. A recording operation by the mobile terminal 1 according to the embodiment 2 will be described with reference to Fig. 5. Further, because Steps S201, S202 and S203 of Fig. 5 are the same operations as to Steps S101, S102 and S103 in the embodiment 1 respectively, those descriptions will be omitted.

After having started recording, the recording control part 12 acquires the recording setting information stored in the setting memory part 32 in the memory unit 31 (Step S204). According to the embodiment 2, the setting memory part 32 holds record ending time information as the recording setting information. Here the record ending time information is information on the time to stop recording which the user has set in advance. The user can set the record ending time information arbitrarily on the mobile terminal 1.

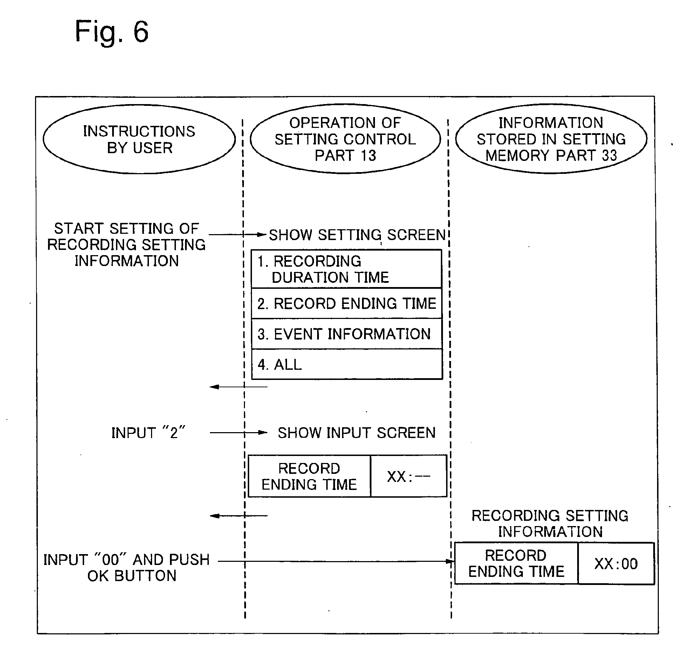

Fig. 6 is a figure showing setting procedures for the record ending time information. The setting procedures for the record ending time information will be described with reference to Fig. 6. The user gives an instruction for setting the recording setting information at arbitrary timing by operating the operating unit 30. The setting control part 13 shows a setting screen of recording setting information on the display unit 27 in response to receiving the above instruction. The setting screen of recording setting information is a screen which indicates four choices of "1.recording duration time", "2.record ending time", "3.event information" and "4.all" like the above-mentioned embodiment 1. Here, the case "2.record ending time" is described, and "3.event information" and "4.all" are mentioned later.

The user inputs "2" on the setting screen. Then, the setting control part 13 shows an input screen of record ending time. For example, the user types "00" here, and pushes an "OK" button. The setting control part 13 generates the data of "record ending time XX:00" as the record ending time information. This is the record ending time information which instructs that recording should be stopped at the time of XX: 00 regardless of time having passed. The setting control part 13 stores this record ending time information in the setting memory part 42. By the above mentioned operation, the user can set the record ending time information. The user can perform the above setting operation arbitrarily in advance.

The recording control part 12 confirms contents of the recording setting information acquired in Step S204 (Step S205). Here, "record ending time XX:00" as the recording setting information is read out. Since "XX:00" is nothing but one example, the user can set it arbitrarily as mentioned above. Next, the recording control part 12 acquires the present time from the clock 42 (Step S206) and compares the record ending time confirmed in Step S205 and the present time (Step S207). When the record ending time and the present time do not coincide with each other (NO), the recording control part 12 performs determination of whether a forced termination instruction has been given by the user (Step S209).

When the forced termination instruction has been given (YES), the recording control part 12 stops recording (Step S208). When no forced termination instruction has been given (NO), the recording control part 12 returns to Step S206.

In Step S207, when the record ending time and the present time coincide with each other (YES), the recording control part 12 stops recording (Step S208). At this time, recording until the record ending time set in advance is completed.

The recording control part 12 is controlling a series of above-mentioned procedures. Accordingly, the user does not need to perform any operations after the user performed an operation of closing the mobile terminal 1 in Step S202 until recording finishes at the set time.

After recording has been started at Step S202, even if the user opens the mobile terminal 1 again, the recording control part 12 continues recording. The user may be able to operate other operations in this state such as transmitting e-mails or the like. It also may be able to set arbitrarily in advance so as not to stop recording even a case where the record ending time and the present time coincide with each other in Step S207.

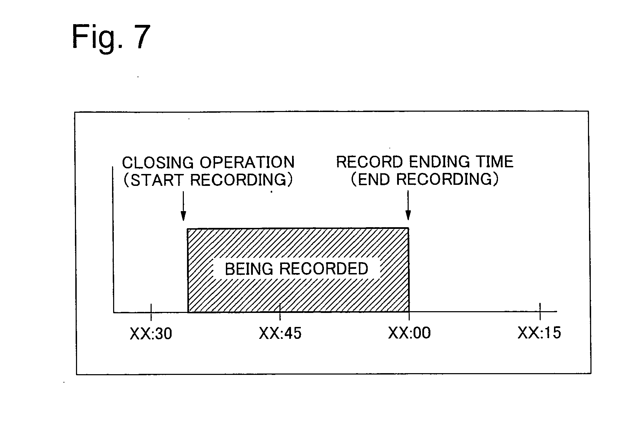

Fig. 7 is a figure illustrating a recording operation in the embodiment 2. As shown in Fig. 7, the recording control part 12 starts recording by a closing operation in Step S202 as a trigger, and stops the recording operation at the record ending time (here, at XX:00) in Step S207.

As it has been described above, in the mobile terminal 1 according to the embodiment 2, the setting control part 13 receives a record ending time of TV broadcasts in advance from the user and stores in the setting memory part 33. By this configuration, the effect that the user can set an arbitrary time for stopping recording can be obtained. Also, the recording control part 12 controls to stop recording when it has become the record ending time stored in the setting memory part 33. By this configuration, the effect that it can record TV broadcasts using a memory area efficiently can be obtained because the mobile terminal 1 is able to record only the required contents.

### [Embodiment 3]

Next, the embodiment 3 of the present invention will be described.

The configuration of mobile terminal in the embodiment 3 of the present invention is similar to the configuration of the mobile terminal 1 in the embodiment 1. Although it is different in data in the setting memory part 33, the description will be omitted because other configurations are the same as those of the embodiment 1.

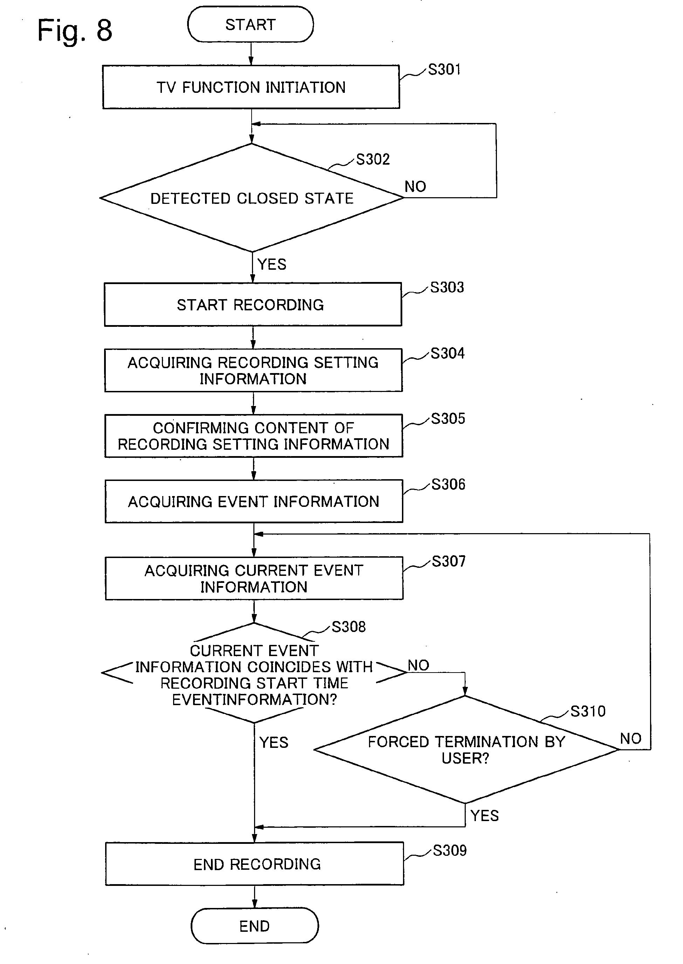

Fig. 8 is a flowchart showing an operation of the mobile terminal 1 in the embodiment 3 of the present invention. A recording operation by the mobile terminal 1 according to the embodiment 3 will be described with reference to Fig. 8. Further, because Steps S301, S302 and S303 of Fig. 8 are the same operations as Steps S101, S102 and S103 in the embodiment 1 respectively, those descriptions will be omitted.

After having started recording, the recording control part 12 acquires the recording setting information stored in the setting memory part 32 in the memory unit 31 (Step S304). According to the embodiment 3, the setting memory part 32 holds event information as the recording setting information. Here, the event information is identification information such as a program name which can be acquired from electronic program information included in the received TV information which is being received by the TV receiving unit 25. The user can arbitrarily set instructing information which defines to stop recording when the event information is changed.

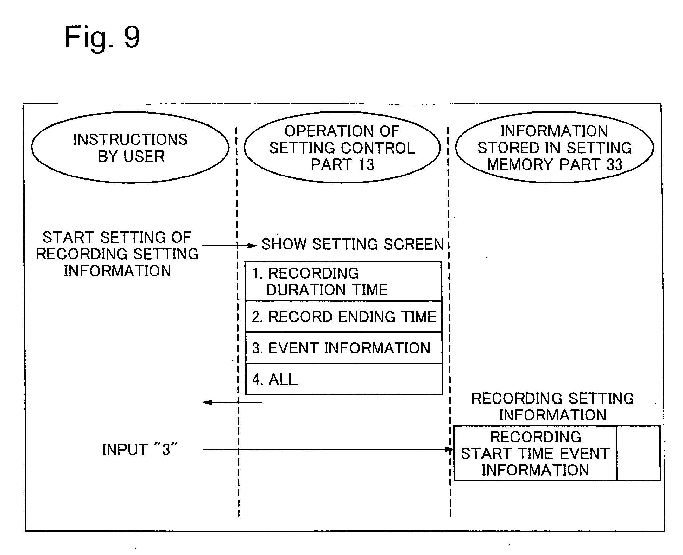

Fig. 9 is a figure showing setting procedures for the event information. The setting procedures for the event information will be described with reference to Fig. 9. The user gives an instruction for setting the recording setting information at arbitrary timing by operating the operating unit 30. The setting control part 13 shows a setting screen of recording setting information on the display unit 27 by receiving the above instruction. The setting screen of recording setting information is a screen which indicates four choices of "1.recording duration time", "2.record ending time", "3.event information" and "4 all" like the above-mentioned embodiment 1. Here, the case "3.event information" is described, and "4.all" is mentioned later.

The user inputs "3" on the setting screen. Then, the setting control part 13 creates a recording start time event information table and stores it in the setting memory part 42. The recording start time event information table has no content at this time. By the above mentioned procedure, the user can set the event information. The user can perform the above setting operation arbitrarily in advance.

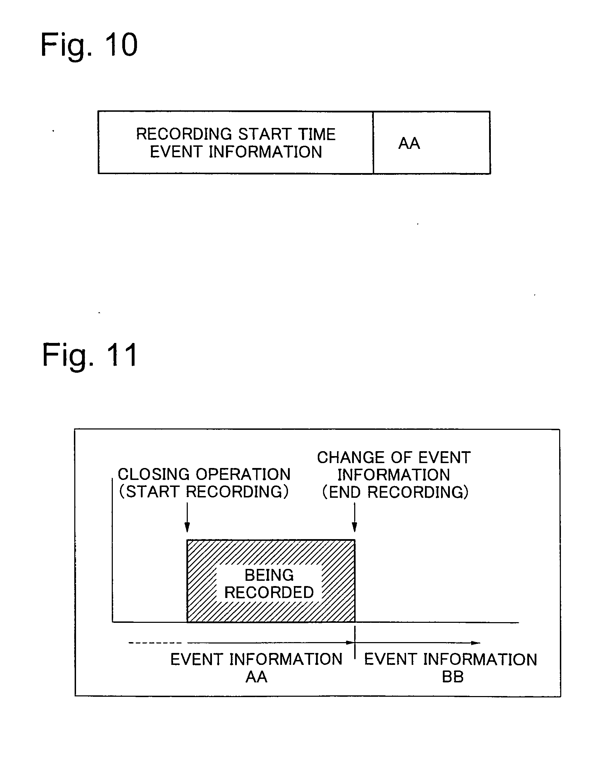

The recording control part 12 confirms contents of the recording setting information acquired in Step S304 (Step S305). Here, the recording start time event information table which has no content is read out. If the recording control part 12 recognizes that the recording setting information is the recording start time event information table, it acquires the event information (Step S306). That is, the recording control part 12 acquires electronic program information from the received TV information received by the TV receiving unit 25, and reads out the event information from it. The recording control part 12 writes the event information into the recording start time event information table stored in the setting memory part 16. Fig. 10 is a figure showing the recording start time event information table stored in the setting memory part 16. Here, it means that the event information "AA" has been received.

Next, the recording control part 12 acquires the current event information (Step S307). The current event information is also acquired by the recording control part 12 which acquires electronic program information from the received TV information which is being received by the TV receiving unit 22, and reads out the event information from it in the same way as above.

Next, the recording control part 12 compares the event information in the recording start time event information table and the current event information, and checks whether the event information is changed (Step S308). The case the event information at recording start-up and the current event information coincide with each other, the recording control part 12 performs determination of whether a forced termination instruction has been given by user (Step S310).

When the forced termination instruction has been given (YES), the recording control part 12 stops recording (Step S309). When no forced termination instruction has been given (NO), the recording control part 12 returns to Step S307.

In Step S308, when the current event information does not coincide with the recording start-up event information (YES), the recording control part 12 stops recording (Step S309). At this time, recording of the program which is being received is completed.

The recording control part 12 is controlling a series of above-mentioned procedures. Accordingly, the user does not need to perform any operations after the user performed an operation of closing the mobile terminal 1 in Step S.302 until recording is stopped by the change of event information.

After recording has been started at Step S302, even if the user opens the mobile terminal 1 again, the recording control part 12 continues the operation of recording. The user may be able to operate other operations in this state such as transmitting e-mails or the like. The user also may be able to set arbitrarily in advance so as not to stop recording even if the current event information has been changed from the recording start-up event information in Step S307.

Fig. 11 is a figure illustrating a recording operation in the embodiment 3. As shown in Fig. 11, the recording control part 12 starts recording by a closing operation in Step S302 as a trigger, and stops the recording operation when it recognizes the change of the event information in Step S308.

Note that although the event information stored in the setting memory part 16 is "AA" as an example in the embodiment 3, other values included in the received TV information may be used.

As it has been described above, in the mobile terminal 1 according to the embodiment 3, the setting control part 13 receives instruction information from the user which defines to stop recording when the receiving program is changed, and stores it in the setting memory part 33. This configuration has advantages in which the user can set an instruction in advance for recording only a program which the user is watching. Also, the recording control part 12 acquires the event information from electronic program information and stores in the setting memory part 33, and controls to stop recording when it detects a change of the event information after recording start. This configuration has advantages in which the mobile terminal 1 can record TV broadcasts using a memory area efficiently because the mobile terminal 1 is able to record only a program required by the user.

### [Embodiment 4]

Next, the embodiment 4 of the present invention will be described.

The configuration of mobile terminal in the embodiment 4 of the present invention is similar to the configuration of the mobile terminal 1 in the embodiment 1. Although it is different in data in the setting memory part 33, because other configurations are the same as those of the embodiment 1, the description will be omitted.

This embodiment 4 will describe a case where the user sets all recording setting information described in the above-mentioned embodiments 1 to 3 in advance.

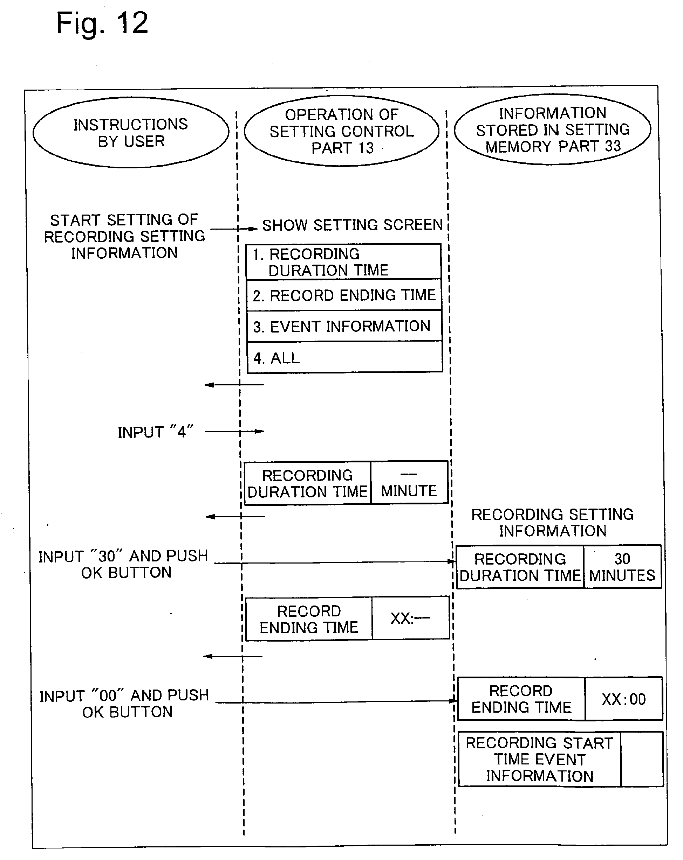

Fig. 12 is a figure showing setting procedures for setting the recording setting information in the embodiment 4. The setting procedures for setting the recording setting information will be described with reference to Fig. 12. The user gives an instruction for setting the recording setting information at arbitrary timing by operating the operating unit 30. The setting control part 13 shows a setting screen of recording setting information on the display unit 27 after receiving the above instruction. The setting screen of recording setting information is a screen which indicates four choices of "1.recording duration time", "2.record ending time", "3.event information" and "4. all" like the above-mentioned embodiment 1. Here, the case "4.all" will be described.

The user inputs "4" on the setting screen. Then, first, the setting control part 13 shows an input screen for the recording duration time. For example, the user types "30 minutes" here, and pushes an "OK" button. The setting control part 13 generates the data of "recording duration time for 30 minutes". Next, the setting control part 13 shows an input screen for the record ending time. For example, the user types "00" here, and pushes an "OK" button. The setting control part 13 generates the data of "record ending time XX:00". Next, the setting control part 13 creates a recording start time event information table. The setting control part 13 stores the recording start time event information table in the setting memory part 42. By the above mentioned procedures, the user can set the recording setting information. The user can perform the above setting operation arbitrarily in advance.

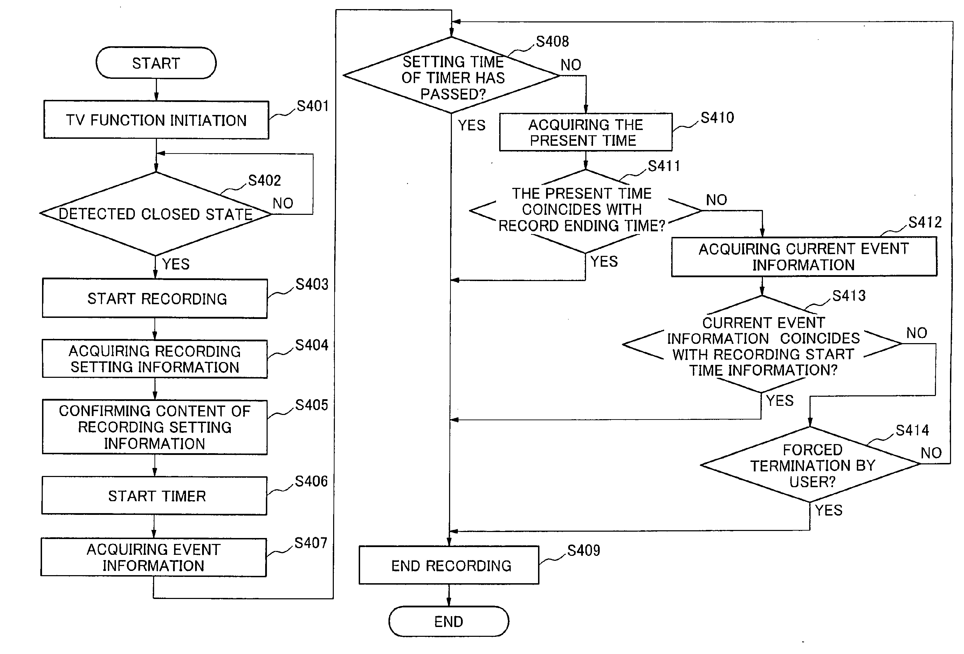

Fig. 13 is a flowchart showing an operation of mobile terminal 1 in the embodiment 4 of the present invention. A recording operation in the mobile terminal 1 according to the embodiment 4 will be described with reference to Fig. 13. Further, because Steps S401, S402 and S403 of Fig. 13 are operations similar to Steps S101, S102 and S103 of the embodiment 1 respectively, those descriptions will be omitted. It is supposed that the setting memory part 42 stores the recording setting information mentioned above.

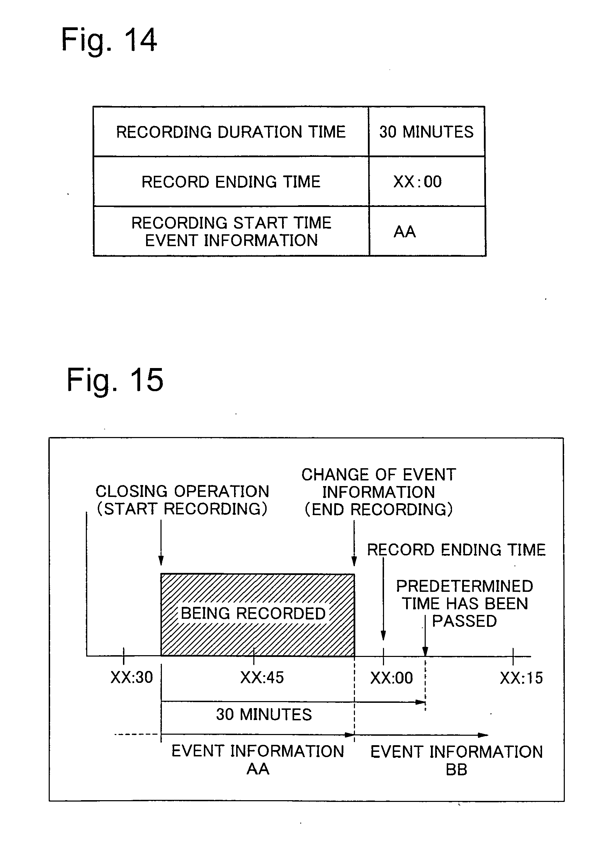

After having started recording, the recording control part 12 acquires the recording setting information stored in the setting memory part 32 in the memory unit 31 (Step S404). The recording control part 12 confirms contents of the acquired recording setting information (Step S405). The recording control part 12 recognizes that the recording duration time information, the record ending time information and the recording start time event information table have been read out. Next, the recording control part 12 sets a value of the recording duration time information to the timer 41, and starts it (Step S406). Next, the recording control part 12 acquires the event information (Step S407). That is, the recording control part 12 acquires electronic program information from the received TV information which is being received by the TV receiving unit 25, and reads the event information from it. The recording control part 12 writes the event information in the recording start time event information table stored in the setting memory part 16. The procedures for acquiring the event information of program which is being received is the same as the procedures described in the embodiment 3 mentioned above. Fig. 14 is a figure showing an example of the recording setting information stored in the setting memory part 16.

Next, the recording control part 12 performs determination of whether a set time in the timer 41 has passed or not (Step S408). When the set time of the timer has passed (YES), the recording control part 12 stops recording (Step S409). At this time, recording for the recording duration time set in advance is completed.

When the set time has not passed at Step S408 (NO), the recording control part 12 acquires the present time (Step S410). The recording control part 12 compares the record ending time acquired in Step S404 and the present time (Step S411). If the record ending time and the present time coincide with each other (YES), the recording control part 12 stops recording. At this time, recording is completed at the record time set in advance.

When the record ending time and the present time does not coincide with each other in Step S411 (NO), the recording control part 12 acquires the current event information (Step S412). Next, the recording control part 12 compares the recording start-up event information acquired in Step S407 and the current event information acquired in Step S412. If both of them are not coincident, that is, when the current event information has been changed (YES), the recording control part 12 stops recording. On the other hand, if both of them are not coincident, that is, when the current event information has not been changed (NO), the recording control part 12 performs determination of whether a forced termination instruction has been given by the user (Step S414). When the forced termination instruction has been given (YES), the recording control part 12 stops recording. When no forced termination instruction has been given (NO), the recording control part 12 returns to Step S408.

The recording control part 12 is controlling a series of above-mentioned procedures. Accordingly, the user does not need to perform any operations until recording is stopped by ending of the recording duration time, by getting to the record ending time or by the change of event information after the user performed an operation of closing the mobile terminal 1 in Step S402.

After recording has been started at Step S402, even if the user opens the mobile terminal 1 again, the recording control part 12 continues the operation of recording. The user may be able to operate other operations in this state such as transmitting e-mails or the like.

Fig. 15 is a figure which describes a recording operation in the embodiment 4. Here, the recording control part 12 starts recording by a closing operation in Step S402 as a trigger, and stops recording when it recognizes the change of the event information.

According to the embodiment 4, as an example, it has been explained that the user set all of the recording duration time information, the record ending time information and the event information as the recording setting information, however it may arrange that any of these can be set.

As it has been described above, in the mobile terminal 1 according to the embodiment 4, the setting control part 13 receives instruction information from the user which defines to stop recording at the time of the duration time for recording TV broadcasts, the record ending time and the received program is changed, and stores in the setting memory part 33. This configuration has advantages in which the user can set a plurality of timing for record ending in advance. Also, the recording control part 12 controls to stop recording based on the recording setting information stored in the setting memory part 33 at a timing of one of events having occurred at first among passing the set duration time for recording, getting to the record ending time and changing of the event information. This configuration has advantages in which the mobile terminal 1 can record TV broadcasts using a memory area more efficiently than the embodiments 1 to 3 mentioned above.

While having described an invention of the present application referring to the embodiments, the invention of the present application is not limited to the above mentioned embodiments. It is to be understood that to the configuration and details of the invention of the present application, various changes can be made within the scope of the invention of the present application by those skilled in the art.

### [Embodiment 5]

Next, the embodiment 5 of the present invention will be described.

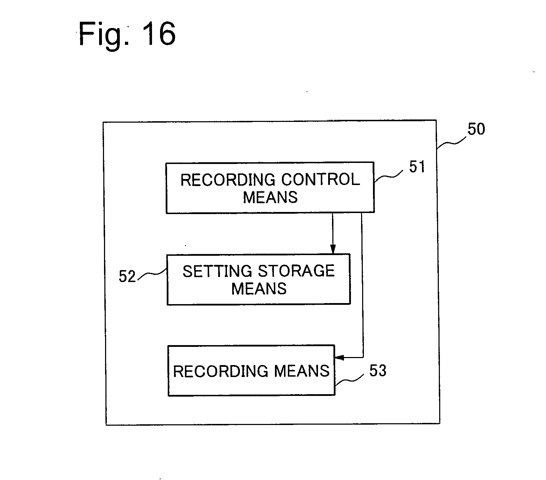

Fig. 16 is a figure showing a configuration of the mobile terminal 50 in the embodiment 5 of the present invention. As shown in Fig. 16, the mobile terminal 50 includes a recording control means 51, a setting storage means 52 and a recording means 53. The recording control means 51 controls recording and playing TV broadcasts. The setting storage means 52 stores the conditions set in advance. The recording means 53 records the contents of the TV broadcasts based on control of the recording control means 51. The mobile terminal 50 changes its form into a predetermined form freely.

Next, an operation of the mobile terminal 50 will be described. The recording control means 51 controls the recording means 53 so as to start recording of TV broadcasts when the mobile terminal 50 has changed its form into a predetermined form as a trigger. And the recording control means 51 controls the recording means 53 so as to stop recording when a predetermined set condition stored in the setting storage means 52 is satisfied.

As described above, the mobile terminal 50 according to the embodiment 5 has advantages in which it can record TV broadcasts using a memory area efficiently due to the fact that the recording control means 51 controls the recording means 53 so as to start recording of TV broadcasts when the mobile terminal 50 has changed its form into a predetermined form as a trigger, and the recording control means 51 controls the recording means 53 so as to stop recording when a predetermined set condition stored in the setting storage means 52 is satisfied.

### INDUSTRIAL APPLICABILITY

The present invention can be applied to a mobile phone, a PDA (Personal digital assistant), an electronic book apparatus, an electronic dictionary, a mobile PC and a carrying DVD (Digital Video Disc/Digital Versatile Disc) recording/playing apparatus.

This application claims priority from Japanese Patent Application No. 2008-014932, filed on January 25, 2008, the contents of which are incorporation herein by reference in their entirety.

## Claims

1. A mobile terminal which has a television function and a television broadcasts recording function and changes a form thereof into a predetermined form freely, said mobile terminal comprising:
a setting storage means for storing predetermined conditions;
a recording means for recording contents of the television broadcasts;
a recording control means for controlling said recording means so as to start recording said television broadcasts when said mobile terminal has changed a form thereof into a predetermined form as a trigger during the television broadcasts being received, and controls said recording means so as to stop recording the television broadcasts when said predetermined condition stored in said setting storage means is satisfied.

2. The mobile terminal according to claim 1, wherein said setting storage means stores said predetermined conditions arbitrarily in advance.

3. The mobile terminal according to claim 1 or claim 2,
wherein, said setting storage means stores recording duration time information which defines a duration time for recording the television broadcasts as said predetermined conditions, and said recording control means controls said recording means so as to stop recording the television broadcasts when the time defined in said recording duration time information has passed.

4. The mobile terminal according to claim 1 or claim 2,
wherein, said setting storage means stores record ending time information which defines a record ending time of the television broadcasts as said predetermined conditions, and said recording control means controls said recording means so as to stop recording the television broadcasts at the time defined in said record ending time information.

5. The mobile terminal according to claim 1 or claim 2,
wherein, said setting storage means stores a prescription as said predetermined conditions which defines to stop recording when a television program being received is changed, and said recording control means controls said recording means so as to stop recording the television broadcasts if event information unique to a television program included in the television program of the television broadcasts at start time of recording is different from event information detected after the recording starts.

6. The mobile terminal according to claim 1, wherein, said setting storage means stores recording duration time information which defines a duration time for recording the television broadcasts, record ending time information which defines a record ending time of the television broadcasts and event information unique to a television program included in the television program of the television broadcasts at start time of recording, and
said recording control means controls said recording means so as to stop recording the television broadcasts when one of conditions in which, after the recording starts, the time defined by said recording duration time information has passed, it has got to the time defined in said record ending time information and event information stored in said setting storage means is different from event information detected after the recording starts is satisfied.

7. The mobile terminal according to claim 6, wherein said setting storage means stores said recording duration time information or said record ending time information arbitrarily in advance.

8. The mobile terminal according to claim 6, wherein said recording control means is able to arbitrarily set in advance availability of recording stop at the time when, after the recording starts, the time defined in said recording duration time information has passed, it has got to the time defined in said record ending time information and event information stored in said setting storage means is different from event information detected after the recording starts.

9. A recording method of television broadcasts by a mobile terminal which has a television function and a television broadcasts recording function and changes a form thereof into a predetermined form freely, said recording method comprising:
storing predetermined conditions;
starting recording said television broadcasts when said mobile terminal has changed a form thereof into a predetermined form as a trigger during the television broadcasts being received; and
stopping recording the television broadcasts when said predetermined condition stored is satisfied.

10. The recording method according to claim 9, wherein said predetermined conditions is arbitrarily set in advance.

11. The recording method according to claim 9 or claim 10, further comprising:
storing recording duration time information which defines a duration time for recording the television broadcasts as said predetermined conditions; and
stopping recording the television broadcasts when the time defined in said recording duration time information has passed.

12. The recording method according to claim 9 or claim 10, further comprising:
storing record ending time information which defines a record ending time of the television broadcasts as said predetermined conditions; and
stopping recording the television broadcasts at the time defined in said record ending time information.

13. The recording method according to claim 9 or claim 10, further comprising:
storing a prescription as said predetermined conditions which defines to stop recording when a television program being received is changed; and
stopping recording the television broadcasts if event information unique to a television program included in the television program of the television broadcasts at start time of recording is different from event information detected after the recording starts.

14. The recording method according to claim 9, further comprising:
storing recording duration time information which defines a duration time for recording the television broadcasts, record ending time information which defines a record ending time of the television broadcasts and event information unique to a television program which is included in the television program of the television broadcasts at start time of recording and;
stopping recording the television broadcasts when one of conditions in which, after the recording starts, the time defined in said recording duration time information has passed, it has got to the time defined in said record ending time information and said stored event information is different from event information detected after the recording starts is satisfied.

15. The recording method according to claim 14, wherein said recording duration time information or said record' ending time information is arbitrarily set in advance.

16. The recording method according to claim 14, wherein availability of recording stop at the time when, after the recording starts, the time defined in said recording duration time information has passed, it has got to the time defined in said record ending time information and said stored event information is different from event information detected after the recording starts is arbitrarily set in advance.

17. A storage medium storing a program for causing a computer, for recording television broadcasts by a mobile terminal which has a television function and a television broadcasts recording function and changes a form thereof into a predetermined form freely, to execute:
a process of storing predetermined conditions;
a process of starting recording said television broadcasts when said mobile terminal has changed a form thereof into a predetermined form as a trigger during the television broadcasts being received; and
a process of stopping recording the television broadcasts when said predetermined condition stored is satisfied.

18. The storage medium storing the program according to claim 17, **characterized by** the program including
a process of setting said predetermined conditions arbitrarily in advance.

19. The storage medium storing the program according to claim 17, **characterized by** the program including
a process of storing recording duration time information which defines a duration time for recording the television broadcasts as said predetermined conditions; and
a process of stopping recording the television broadcasts when the time defined in said recording duration time information has passed.

20. The storage medium storing the program according to claim 17, **characterized by** the program including
a process of storing record ending time information which defines a record ending time of the television broadcasts as said predetermined conditions; and
a process of stopping recording the television broadcasts at the time defined in said record ending time information.

21. The storage medium storing the program according to claim 17, **characterized by** the program including
a process of storing a prescription as said predetermined conditions which defines to stop recording when a television program being received is changed; and
a process of stopping recording the television broadcasts if event information unique to a television program included in the television program of the television broadcasts at start time of recording is different from event information detected after the recording starts.

22. The storage medium storing the program according to claim 17, **characterized by** the program including
a process of storing recording duration time information which defines a duration time for recording the television broadcasts, record ending time information which defines a record ending time of the television broadcasts and event information unique to a television program which is included in the television program of the television broadcasts at start time of recording; and a process of stopping recording the television broadcasts when one of conditions in which, after the recording starts, the time defined in said recording duration time information has passed, it has got to the time defined in said record ending time information and said stored event information is different from event information detected after the recording starts is satisfied.

23. The storage medium storing the program according to claim 22, **characterized by** the program including
a process of setting said recording duration time information or said record ending time information arbitrarily in advance.

24. The storage medium storing the program according to claim 22, **characterized by** the program including
a process of setting, arbitrarily in advance, availability of recording stop at the time when, after the recording starts, the time defined in said recording duration time information has passed, it has got to the time defined in said record ending time information and said stored event information is different from event information detected after the recording starts.
